# EUROPEAN PATENT APPLICATION

(11) **EP 3 843 107 A1**
(43) Date of publication of application: **30.06.2021**
(21) Application number: 19852855.6
(22) Date of filing: 21.08.2019
(51) Int. Cl.: G21C 1/00, B64G 1/42, G21G 1/06, G21H 3/00

(54) **GENERATOR AND METHOD FOR USING SAME**

(30) Priority: 21.08.2018 JP 2018154873
(71) Applicant: Japan Aerospace Exploration Agency, Tokyo 182-8522 (JP)
(72) Inventor: SONE, Yoshitsugu, Chofu-shi, Tokyo 182-8522 (JP); KUNINAKA, Hitoshi, Chofu-shi, Tokyo 182-8522 (JP); TAKASHIMA, Takeshi, Chofu-shi, Tokyo 182-8522 (JP); WATANABE, Takashi, Yamato-shi, Kanagawa 242-0007 (JP)
(74) Representative: Richly & Ritschel Patentanwälte PartG mbB
(86) International application number: PCT/JP2019/032588
(87) International publication number: WO 2020/040182

(57) **Abstract**

A generator (100) of the present invention has a heat source (101) containing a radioisotope substance precursor that becomes a radioisotope substance by irradiation with a neutron and a controller (108) that controls the irradiation with the neutron.

## Description

### TECHNICAL FIELD

The present invention relates to a generator and a method for using the same.

Priority is claimed on Japanese Patent Application No. 2018-154873 filed in Japan on August 21, 2018, the content of which is incorporated herein by reference.

### BACKGROUND ART

In order to secure electricity in remote places where power generation by a solar cell is difficult, there is a case where a method in which heat energy is secured and electricity is secured by thermoelectric conversion is used.

For example, in space exploration, in order to secure night-time electricity in deep space that is farther than Jupiter or the surface of the moon where solar photovoltaic power generation becomes difficult, a method in which a radioisotope is used as a heat source (radioisotope thermal unit, RTU) or a method in which this heat is converted to electricity as necessary (radioisotope thermal generator, RTG) has been applied. (Patent Literatures 1 and 2 and Non Patent Literatures 1 and 2). A radioisotope thermoelectric generator is an electricity generator device in which, typically, a generator containing plutonium ²³⁸Pu or polonium ²¹⁰Po as a heat source substance is used and electricity is supplied by thermoelectrically converting the generated heat. The same method is also effective for deep sea exploration, polar exploration, geofront exploration, the securement of electricity in isolated settlements, and the like.

Since a radioisotope thermoelectric generator handles a radioactive substance which generates strong radioactive rays as a heat generation source, it is indispensable to examine safety management from assembly to operation. With regard to the application of a radioisotope thermoelectric generator to space as an example, each country puts a number of restrictions on launching space probes with a radioisotope thermoelectric generator. Furthermore, RTGs containing plutonium ²³⁸Pu used as a heat source have another problem of safety assurance in addition to the toxicity of plutonium, and thus, recently, it has become difficult to use RTGs.

### [Citation List]

### [Patent Literature]

[Patent Literature 1] United States Patent No. 6365822
[Patent Literature 2] United States Patent No. 9099204

### [Non Patent Literature]

[Non Patent Literature 1] B. C. Blanke, J. H. Birden, K. C. Jordan, E. L. Murphy, "Nuclear battery-thermocouple type summary report", AEC Research and Development Report, Monsanto research corporation, Mound laboratory, Miamisburg, Ohio, US, 1962.
[Non Patent Literature 2] L. 1. Shure and H. J. Schwartz, "Survey Of Electric Power Plants For Space Applications", NASA technical memorandum, TM X-52158, US, 1965.

### SUMMARY OF INVENTION

### Technical Problem

The present invention has been made in view of the above-described circumstances, and an object of the present invention is to provide a generator whose safety management is easy and which is capable of enhancing the flexibility of space exploration, ocean exploration, polar exploration, the securement of electricity in isolated settlements, and the like, and a method for using the same.

### Solution to Problem

In order to solve the above-described problems, the present invention employs the following means.

A generator according to one aspect of the present invention has a heat source containing a radioisotope substance precursor that becomes a radioisotope substance by irradiation with a neutron and a controller that controls the irradiation with the neutron.

### Advantageous Effects of Invention

In the generator of the present invention and the method for using the same, a radioisotope substance precursor that converts to a radioisotope substance and decays only in the case of being irradiated with a neutron, that is, a substance that does not decay until being irradiated with a neutron is provided as a heat source substance. Therefore, it is possible to control the timing of the generation of a radioisotope from the heat source substance by neutron irradiation.

Particularly, in the case of using the generator of the present invention in a space probe, it is possible to control the converted radioisotope substance to begin to decay at a timing where the space probe sufficiently rises away from the ground. Therefore, the safety management of the space probe becomes dramatically easier, and it is possible to dramatically improve the flexibility of space exploration.

### BRIEF DESCRIPTION OF DRAWINGS

Fig. 1 is a block diagram of a generator according to a first embodiment of the present invention.
Fig. 2 is an exploded view schematically showing the configuration of the generator according to the first embodiment of the present invention.
Fig. 3 is a block diagram of a generator according to a second embodiment of the present invention.
Fig. 4 is an exploded view schematically showing the configuration of a portion of the generator according to the second embodiment of the present invention that is mounted in a space probe.
Fig. 5 is a perspective view schematically showing the configuration of a nuclear reactor that is included in the generator according to the second embodiment of the present invention.

### DESCRIPTION OF EMBODIMENTS

Hereinafter, generators according to embodiments to which the present invention is applied and methods for using the same will be described in detail using drawings. It should be noted that, in some of the drawings to be used in the following description, a characteristic portion is shown in an enlarged manner for convenience in order to facilitate the understanding of the characteristic, and the dimensional ratio and the like of each configurational element are not always the same as those in actual cases. In addition, a material, a dimension, and the like exemplified in the following description are simply examples, and the present invention is not limited thereto and can be appropriately modified and carried out within the scope of the gist of the present invention.

### <First Embodiment>

### (Generator)

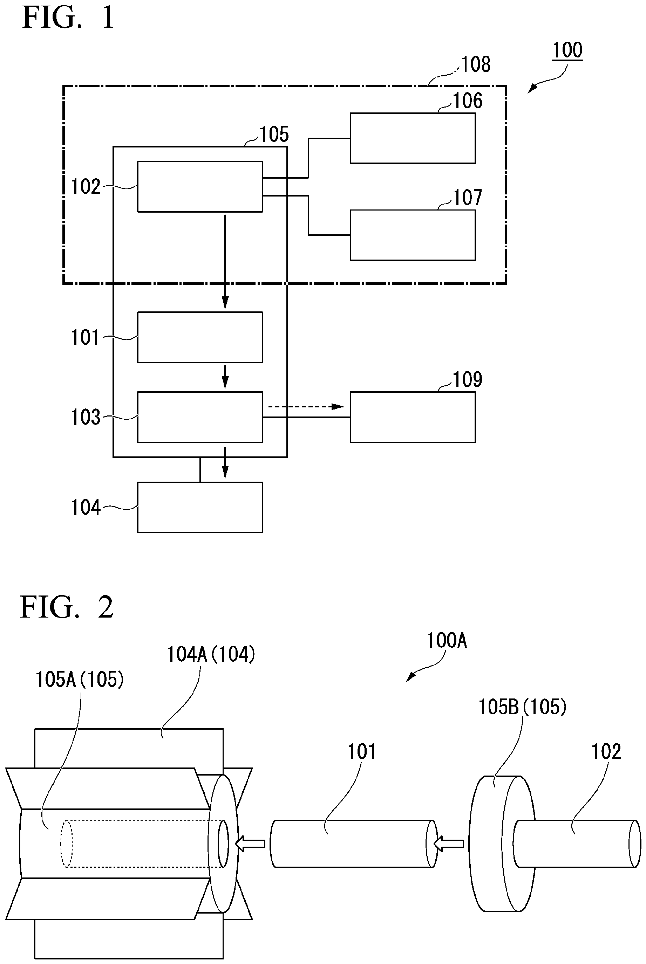

Fig. 1 is a block diagram schematically showing the configuration of a generator (heat generator, power generator, or the like) 100 according to a first embodiment of the present invention. Solid arrows indicate the flow of heat, and a dashed arrow indicates the flow of electricity. The generator 100 mainly has a heat source 101, a controller 108 that controls irradiation with a neutron, a thermoelectric conversion device 103, and an RTG shell 105 that encompasses the above-described components and includes a heat dissipation device 104. The controller 108 is mainly composed of a neutron source 102, neutron generation means 106, and neutron irradiation means 107.

For example, when it is assumed that the neutron source 102 is mounted in a space probe, a case is exemplified where the neutron source 102 is disposed inside the RTG shell 105, but the neutron source 102 may be provided outside the RTG shell 105 as long as it is disposed inside the space probe.

The heat source (RTG core) 101 contains a radioisotope substance precursor (a fertile substance of a radioisotope). This radioisotope substance precursor does not decay spontaneously and does not have any properties as a radioisotope substance on its own. However, the radioisotope substance precursor is a neutron-assisted radioisotope substance and has a property of converting to a radioisotope substance in the case of being irradiated with a neutron.

It should be noted that, in the present specification, a nuclide capable of decaying spontaneously on its own and, furthermore, having a half-life of shorter than 500 million years is defined as the radioisotope. Based on this definition, the radioisotope substance precursor in the present specification is not capable of decaying spontaneously on its own, has a half-life of 500 million years or longer, and is not the radioisotope.

The radioisotope substance precursor is an element having a half-life of longer than 24,000 years, which is the half-life of plutonium, from the viewpoint of preventing the element from beginning to decay at least on earth and is preferably an element having a half-life of 5 billion years or longer. Thorium ²³²Th, bismuth ²⁰⁹Bi, and thallium ²⁰³ Tl can be used. Among them, thorium ²³²Th undergoes alpha decay, but has a half-life of approximately 14 billion years and can be regarded as substantially not having fissionability. Therefore, thorium ²³²Th is more preferable as the radioisotope substance precursor of the present embodiment. The radioisotope substance precursor preferably contains at least 40% or more of thorium ²³²Th as a main component.

The radioisotope substance precursor irradiated with a neutron is converted (activated) to a radioisotope substance (radioisotope) by the capture of a neutron. Subsequently, from heat that is generated when this radioisotope substance decays, a thermoelectromotive force can be obtained through the thermoelectric conversion device 103. For example, in a case where the radioisotope substance precursor is thorium ²³² Th, the irradiation of thorium ²³²Th with a neutron converts thorium ²³²Th to uranium ²³³U by the capture of a neutron, and, from heat generated from the decay of this uranium ²³³U, a thermoelectromotive force can be obtained.

The neutron source 102 includes a raw material substance capable of decaying to separate and generate a neutron. Examples of such a substance include radium ²²⁶ Ra/beryllium Be, americium ²⁴¹Am/beryllium Be, californium ²⁵²Cf, and the like. The neutron source 102 may contain 5% or more and 10% or less of plutonium ^{23R}Pu. When the neutron source 102 contains a small amount of plutonium ²³⁸Pu, it is possible to improve the neutron generation efficiency.

The neutron generation means 106 has a function of generating a pure neutron (separated and generated from an atom) intended to irradiate the radioisotope substance precursor. The specific generation procedure is not limited, but a pure neutron can be generated by, for example, irradiating the raw material substance of a neutron with a particle beam such as an electron beam or a proton beam using an accelerator or the like to separate and generate a neutron from the raw material substance provided in the neutron source 102.

In the irradiation of the neutron source 102 with an electron beam, for example, in the recent deep space exploration field, it is possible to use a technique of an ion engine that has been attracting attention as a propulsion mechanism. The ion engine is a device including a portion that generates a cation and a neutralizer (electron gun) that emits an electron generated during the generation of the cation. This electron that is emitted from the neutralizer is caused to collide with an aluminum member (in an accelerated manner, if possible), whereby a neutron can be generated.

In addition, in the case of using, for example, a mixture of an element that undergoes α decay such as radium ²²⁶Ra and beryllium Be as the neutron source, it is possible to generate a neutron using a spontaneous fission reaction. In addition, it is also possible to generate a neutron by causing a fusion reaction between deuterium and tritium using an accelerator or the like.

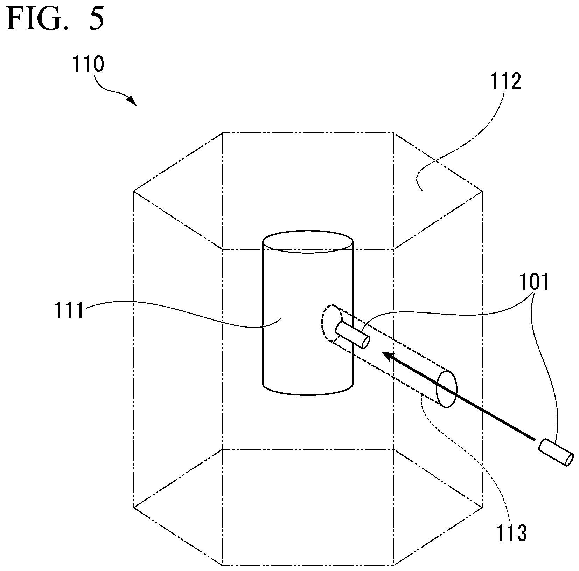

The neutron irradiation means 107 has a function of irradiating the radioisotope substance precursor with the neutron generated using the neutron generation means 106. The specific irradiation procedure is not limited, but it is possible to use, for example, a nuclear reactor-type neutron irradiation means described below (Fig. 5). That is, a passage connecting a position where the neutron has been generated and the position of the radioisotope substance precursor is formed using a neutron reflective material, thereby guiding the generated neutron to the radioisotope substance precursor. Therefore, the radioisotope substance precursor is irradiated with the neutron that has reached the position of the radioisotope substance precursor through the passage.

In addition, the neutron irradiation means 107 has a function of controlling the timing of neutron irradiation, and, with the use of this function, it is possible to control the radioisotope substance precursor to be converted to a radioisotope substance at a predetermined timing. The predetermined timing mentioned herein refers to a timing where the space probe reaches a position sufficiently away from the ground (preferably in outer space (at an altitude of 100 km or more) and more preferably in outer space at an altitude of 300 km or more) such that the diffusion of the radioisotope substance does not affect lives on the earth.

In addition, outer space mentioned here refers to a space area that does not belong to the earth.

As an example, in a case where the generator 100 is mounted in an unmanned space probe, the neutron irradiation means 107 is further provided with a function of remotely operating the above-described control, a function of automatically operating the above-described control by setting a timer, or the like on the ground, on other celestial bodies, or in outer space. In a case where the generator 100 is mounted in a manned space probe, it is also possible to simplify the configuration of the neutron irradiation means 107 by causing a person to perform this control.

As the thermoelectric conversion device 103, a thermoelectric conversion element made of metal or a semiconductor (silicon, germanium, lead, tellurium, or the like) is used. Here, between two terminals of the thermoelectric conversion element, the high-temperature side terminal is connected to the heat source 101, and the low-temperature side terminal is connected to the heat dissipation device 104 (the outer wall of the probe) that emits heat into outer space. Heat generated from the heat source 101 at the time of capturing the neutron is converted to electricity through the thermoelectric conversion device 103 and can be used for the driving of a variety of devices requiring electricity. As the thermoelectric conversion device, a Stirling engine generator may be used. This electricity may be temporarily charged in a storage battery 109 and extracted when necessary.

It should be noted that the thermoelectric conversion element converts approximately 10% to 15% of heat generated during the decay of the radioisotope substance, and electricity that is sporadically obtained within a short period of time is small and is not large enough to drive a variety of devices in, for example, the space probe. Therefore, in reality, the generator 100 is preferably designed to store electricity in the storage battery 109 for a certain period of time and, when the electricity reaches a sufficient level of magnitude, send the stored electricity to a variety of devices.

Fig. 2 is an exploded view schematically showing one configuration example 100A of the generator 100 in the case of being mounted in a space probe as an example and shows a state where the columnar heat source 101 is extracted from the RTG shell 105. It should be noted that, here, the thermoelectric conversion device 103, the neutron generation means 106, the neutron irradiation means 107, and the storage battery 109 are not shown.

In this type of generator 100, as the heat source 101, it is possible to use a columnar heating body in which the radioisotope substance precursor is kneaded into a base material formed of a carbon fiber or the like. Alternatively, the heat source 101 may be a mixture of the radioisotope substance precursor and zirconium hydride ZrH1.6 in a ratio of 42:58.

The RTG shell 105 has a tubular shape with one end open and is composed of an accommodating portion 105A in which the heat source 101 is accommodated, the thermoelectric conversion device 103, and the like and an open end-sealing portion (lid body) 105B. A plurality of planar members (heat dissipation plates) 104A are attached to the side wall of the accommodating portion 105A as the heat dissipation device 104 so as to be joined to the side surface portions. Here, a case where the neutron source 102 is attached to the sealing portion 105B on the outside of the RTG shell 105 is exemplified.

The outside of the RTG shell 105 is preferably formed of a layer containing at least one material of iron, tungsten, graphite, and the like as a main component. When the space in which the heat source is accommodated is covered by this layer, it is possible to obtain at the same time effects of suppressing and decelerating neutrons that tend to leak out the space in which the heat source is accommodated. As a result, damage to peripheral devices caused by the collision of leaked neutrons is mitigated, and simultaneously, the neutron usage efficiency at the time of generating the radioisotope improves.

It should be noted that, in a case where the storage battery 109 is a lithium ion secondary battery and a film containing carbon as a main component is formed on the outside of the RTG shell 105, it is possible to compensate for the shortage of the negative electrode material in the storage battery 109 that is mainly made from carbon.

Similarly, a layer containing beryllium as a main component (accounting for 90% or more) is preferably formed on the inside of the RTG shell 105. In the layer containing beryllium as the main component, it is possible to obtain, in addition to a deceleration effect of diffusing neutrons, an effect of multiplying the number of separated and generated neutrons (neutron multiplication effect). With the neutron multiplication effect, it is possible to improve the conversion efficiency of the radioisotope substance precursor to a radioisotope substance and, furthermore, to activate the generation of heat energy as the heat source.

### (Method for using generator)

The procedure of generating (supplying) heat energy for a space probe by using the generator 100 having the above-described configuration will be described.

First, a space probe equipped with the generator 100 as a radioisotope thermoelectric generator is launched.

Next, when the space probe sufficiently rises away from the ground, preferably when the space probe reaches outer space (usually, an altitude of 100 km or more is regarded as outer space), and more preferably when the space probe reaches an altitude of 200 km or more, the radioisotope substance precursor is irradiated with a neutron using the controller 108, the radioisotope substance precursor is converted to a radioisotope substance. After that, this radioisotope substance decays, whereby heat energy is generated.

This heat energy can be used to, for example, keep the inside of the space probe warm and also can be used to generate a thermoelectromotive force through the thermoelectric conversion device 103 to drive a variety of devices mounted in the space probe.

### (Modification Example 1)

The neutron source 102 does not need to be mounted in the space probe as described above, and the neutron source may be installed in, for example, a celestial body other than the earth or an artificial structure present in outer space (a space station, an artificial satellite, or the like). In this case, the space probe launched from the earth is landed (connected) on the same celestial body or the same artificial structure and is irradiated with a neutron using the neutron source installed in the celestial body or the artificial structure. Since there is no concern of lives on the earth being affected by the neutron source, a nuclear reactor can be used as the neutron source, and thus it is possible to significantly improve the neutron generation efficiency and to significantly increase heat energy being generated.

When neutron sources are installed in the same manner in a plurality of celestial bodies distributed in the direction away from the earth, it is possible to make the neutron sources function as relay stations for resupplying heat energy to the space probe. When the number of celestial bodies that serve as relay stations is increased, it becomes possible to send the space probe farther and drive the space probe by using these celestial bodies, and it is possible to broaden the explorable range.

### (Modification Example 2)

Unlike the examples described thus far, a celestial body other than the earth that emits a neutron may be used as the neutron source 102, and the radioisotope substance precursor may be irradiated with a neutron that is emitted from the celestial body. In this case, the space probe does not need to be equipped with the neutron source 102, the neutron generation means 106, and the neutron irradiation means 107, and it is possible to realize the simplification of the device configuration and weight reduction.

As described above, the generator 100 according to the present embodiment includes the radioisotope substance precursor that converts to a radioisotope only in the case of being irradiated with a neutron as the heat source substance. Therefore, it is possible to control the timing of the generation of the radioisotope from the heat source substance by neutron irradiation.

Therefore, in a case where the generator 100 is used in a space probe as a radioisotope thermoelectric generator, it is possible to control the converted radioisotope substance to begin to decay at a timing where the space probe sufficiently rises away from the ground. Therefore, it is possible to prevent the radioisotope from affecting lives on the earth, and as a result, the safety management of the space probe becomes dramatically easier, and it is possible to dramatically improve the flexibility of space exploration.

It should be noted that the generator 100 of the present embodiment can be used as not only a radioisotope thermoelectric generator but also as mere heating means. In this case, the thermoelectric conversion device 103 becomes unnecessary.

### <Second Embodiment>

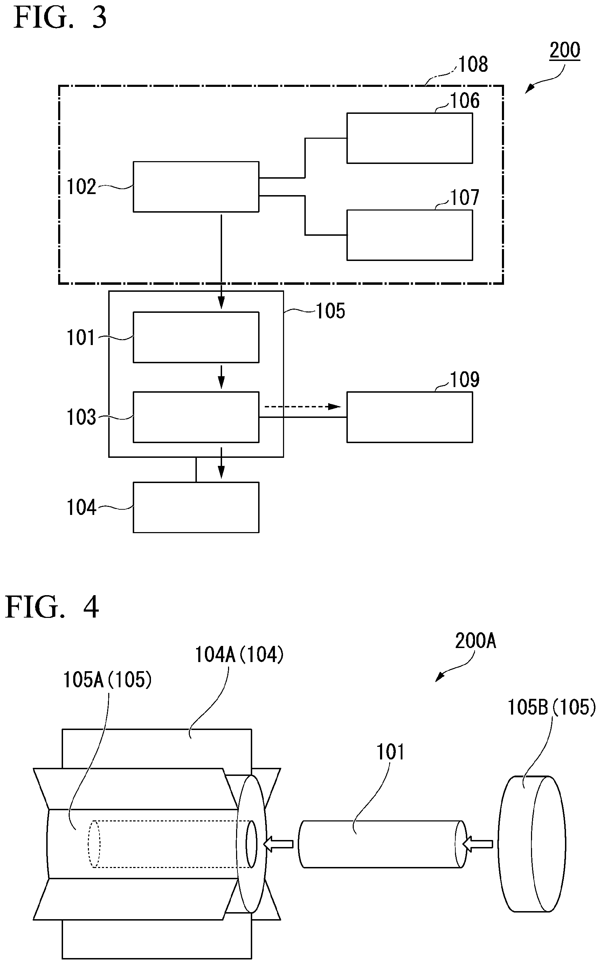

Fig. 3 is a block diagram schematically showing the configuration of a generator 200 according to a second embodiment of the present invention. In the present embodiment, the neutron source 102, the neutron generation means 106, and the neutron irradiation means 107 are assumed not to be mounted in the space probe, are provided outside the RTG shell, and are disposed outside the space probe. The other configurations are the same as those of the first embodiment, and a portion corresponding to the first embodiment will be indicated by the same reference sign regardless of the difference in shape.

Fig. 4 is an exploded view schematically showing one configuration example 200A of a portion of the generator 200 that is mounted in a space probe and shows a state where the columnar heat source 101 is extracted from the RTG shell 105. It should be noted that, here, the thermoelectric conversion device 103 and the storage battery 109 are not shown. Since the portion that is mounted in a space probe in the present embodiment does not include the neutron source 102, the neutron generation means 106, and the neutron irradiation means 107, it is possible to realize the simplification of the device configuration and weight reduction compared with the same portion of the first embodiment.

Fig. 5 is a perspective view schematically showing the configuration of a nuclear reactor 110 for converting the radioisotope substance precursor to a radioisotope substance. The nuclear reactor 110 is mainly composed of a reactor core 111 and an outer wall 112 that encompasses the reactor core 111. In the outer wall 112, a hole is provided that communicates the reactor core 111 to the outside of the nuclear reactor 110. This hole functions as a neutron extraction hole 113. In the present embodiment, the nuclear reactor 110 also has functions as the neutron source 102, the neutron generation means 106, and the neutron irradiation means 107.

### (Method for generating heat energy)

In the present embodiment, the radioisotope substance precursor is irradiated with a neutron before the space probe is launched. The procedure for generating heat energy using the generator 200 of the present embodiment will be described.

First, on the ground, a radioisotope substance such as plutonium is enclosed in the reactor core 111, and a fission chain reaction of the radioisotope substance is induced, thereby generating neutrons.

Next, on the ground, immediately before the assembly of a radioisotope thermoelectric generator, a radioisotope substance precursor (heat source substance) that configures the heat source 101 is disposed near the reactor core 111 through the neutron extraction hole 113.

The neutrons generated in the reactor core 111 radially spread from the reactor core 111, some of the neutrons enter the neutron extraction hole 113 and irradiate the radioisotope substance precursor that is disposed in the neutron extraction hole 113. The radioisotope substance precursor irradiated with the neutrons converts to a radioisotope substance by the capture of a neutron and, furthermore, decays. Heat energy is generated in association with this decay.

It should be noted that the time necessary for the converted radioisotope substance to decay is determined for each element that configures the radioisotope substance precursor. In the present embodiment, within the time taken for the radioisotope substance to decay, it is necessary that the generator 100 including the radioisotope substance precursor irradiated with neutrons (heat source) be assembled and, furthermore, the space probe preferably rises away from the ground 300 km or more and more preferably reaches outer space.

That is, it is necessary to adjust the timing of neutron irradiation on the ground such that the radioisotope substance precursor converts to a radioisotope substance after the space probe preferably rises away from the ground 300 km or more and more preferably reaches outer space.

Even in the case of using the generator 200 of the present embodiment, it is possible to control the neutron irradiation such that the radioisotope substance precursor begins to decay at a timing where the space probe sufficiently rises away from the ground. Therefore, it is possible to prevent the radioisotope from affecting lives on the earth, and as a result, the safety management of the space probe becomes dramatically easier, and it is possible to dramatically improve the flexibility of space exploration.

Furthermore, in the generator 200 of the present embodiment, the generation and control of neutrons and the neutron irradiation are performed on the ground. Therefore, the space probe does not need to be equipped with the neutron source 102, the neutron generation means 106, and the neutron irradiation means 107, and it is possible to realize the simplification of the device configuration and weight reduction.

### [Reference Signs List]

100, 200 Generator
100A and 200A Portion that is mounted in space probe
101 Heat source
102 Neutron source
103 Thermoelectric conversion device
104 Heat dissipation device
104A Heat dissipation plate
105 RTG shell
105A Accommodating portion
105B Sealing portion
106 Neutron generation means
107 Neutron irradiation means
108 Controller
109 Storage battery
110 Nuclear reactor
111 Reactor core
112 Outer wall
113 Neutron extraction hole

## Claims

1. A generator, comprising:
a heat source containing a radioisotope substance precursor that becomes a radioisotope substance by irradiation with a neutron; and
a controller that controls the irradiation with the neutron.

2. The generator according to Claim 1,
wherein the radioisotope substance precursor has a half-life of 5 billion years or more.

3. The generator according to Claim 1 or 2,
wherein the radioisotope substance precursor contains thorium as a main component.

4. The generator according to Claim 1,
wherein the controller is composed of
a neutron source,
neutron generation means for generating the neutron from the neutron source, and
neutron irradiation means for irradiating the radioisotope substance precursor with the generated neutron at a predetermined timing.

5. The generator according to Claim 4,
wherein the neutron source contains plutonium.

6. The generator according to Claim 4 or 5, further comprising:
a thermoelectric conversion device connected to the radioisotope substance precursor.

7. The generator according to any one of Claims 4 to 6,
wherein the neutron source is disposed inside a space in which the heat source is accommodated.

8. The generator according to any one of Claims 4 to 6,
wherein the neutron source is disposed outside a space in which the heat source is accommodated.

9. The generator according to any one of Claims 1 to 8,
wherein a space in which the heat source is accommodated is covered by a layer containing at least one material of iron, tungsten, and graphite as a main component.

10. A method for using a generator for generating heat energy for a space probe by using the generator according to any one of Claims 1 to 9,
wherein the radioisotope substance precursor is irradiated with a neutron before the space probe is launched, and
a timing of the neutron irradiation is adjusted such that the radioisotope substance precursor converts to a radioisotope substance after the space probe reaches outer space.

11. The method for using a generator according to Claim 10,
wherein the neutron with which the radioisotope substance precursor is irradiated is generated by irradiating an aluminum member with a particle beam.
